# EUROPÄISCHE PATENTSCHRIFT

(11) **EP 1 826 136 B1**
(45) Veröffentlichungstag und Bekanntmachung des Hinweises auf die Patenterteilung: **14.04.2010**
(21) Anmeldenummer: 07000459.3
(22) Anmeldetag: 10.01.2007
(51) Int. Cl.: B65D 71/50, B29C 45/26, B67B 7/18

(54) **Träger für Flaschen und dgl. Behälter mit Flaschenöffner**
Carrier for bottles and similar. Container with bottle opener
Support pour bouteilles et récipients analogues doté dýun dispositif dýouverture de bouchon

(30) Priorität: 06.02.2006 DE 102006005311
(43) Veröffentlichungstag der Anmeldung: 29.08.2007
(60) Teilanmeldung: 08012957.0
(73) Patentinhaber: Schoeller Arca Systems GmbH, 19057 Schwerin (DE)
(72) Erfinder: Pranghofer, Stefanie, 80796 München (DE); Oster, Heinz, 82319 Starnberg (DE); Barth, Christian, 82049 Pullach (DE)
(74) Vertreter: Bockhorni & Kollegen

(56) Entgegenhaltungen:
- WO-A-01/89952
- WO-A-2004/050502
- DE-U1- 9 307 425
- DE-U1- 29 902 362

## Beschreibung

Die vorliegende Erfindung betrifft einen Träger zur Aufnahme von Flaschen und dgl. Behältern nach dem Oberbegriff von Anspruch 1 und ein System aus dem Träger und mindestens einer Flasche nach dem Oberbegriff von Anspruch 13.

Für den Transport von Verpackungsbehältern, insbesondere Getränkeflaschen, gibt es verschiedene Möglichkeiten. Üblich ist die Lagerung und der Transport der Getränkeflaschen in festen Flaschenkästen, wobei inzwischen auch Flaschenkästen Verwendung finden, die teilbar ausgebildet sind, so dass der Käufer die Flaschen komfortabel beidhändig tragen kann. Ebenfalls bekannt ist der Transport einiger weniger, beispielsweise sechs bis zehn, Flaschen hängend in einem Träger, der aus einem Tragkörper mit daran befindlichem Tragbügel gebildet ist. Dieser in der WO 2004/076310 vorgeschlagene Flaschenträger ermöglicht einen hängenden Transport der Flaschen, die in den Tragkörper an ihren Hälsen eingefügt und dann mit Hilfe des Tragbügels gleichzeitig angehoben und transportiert werden können. Eine verbesserte Ausführungsform eines solchen Flaschenträgers ist in der DE 20 2005 016 091 beschrieben. Dieser Flaschenträger weist einen einstückig über Filmscharniergelenkverbindungen mit dem Tragkörper aus- und einklappbar verbundenen Tragbügel auf, wodurch der Flaschenträger ein einfaches und bequemes Handling, aber auch eine gute und stabile Stapelung mehrerer mit Flaschen gefüllter Flaschenträger ermöglicht. Insbesondere ist der Flaschenträger trotz seines stabilen und robusten Aufbaus kostengünstig herstellbar. Im Zusammenhang mit dem Kostenfaktor ist die Herstellung eines solchen Flaschenträgers aus Polyethylen, insbesondere einem Polyethylen-Regenerat wirtschaftlich besonders vorteilhaft. Ein solcher Kunststoffflaschenträger stellt auch ein sehr gutes Werbemittel dar.

PET-Getränkeflaschen sind üblicherweise mit einem Drehverschluss verschlossen und weisen als Qualitätssiegel einen umlaufenden Ring auf, der sich nach dem erstmaligen Öffnen des Drehverschlusses von diesem wenigstens teilweise löst und so den Öffnungsvorgang eindeutig ausweist. Im Gegensatz zu Kronverschlüssen, die sich mittels Hebelwirkung nach oben hin öffnen lassen, können solche Drehverschlüsse nur mittels einer drehenden Bewegung des Verschlusses gegenüber der Flasche geöffnet werden. Diese Bewegung kann durch vielfältige Einflüsse erschwert sein, so dass unter Umständen für den Benutzer ein Öffnen der Flasche nicht oder nicht ohne weiteres möglich ist. Beispielsweise ist ein Öffnen des Drehverschlusses dann erschwert, wenn die den Verschluss greifende Hand oder der Verschluss selbst nicht ganz trocken sind oder wenn der Benutzer nicht in der Lage ist, ein genügend großes Drehmoment auf den Drehverschluss zu übertragen.

Aus der DE 29902362 U ist ein Flaschenträger bekannt, auf dem ein Flaschenöffner für Kronkorken angeordnet ist

Aus der WO 2004/050502 A1 ist ein Flaschenträger für mehrere Flaschen bekannt, auf dem ein gesonderter Flaschenöffner für Kronkorken angeordnet ist. Diese Ausgestaltung ist kompliziert aufgebaut und nicht für Drehverschlüsse geeignet. Weiterhin ist aus der WO 01/89952 A1 ein Greif- und Öffnungselement für Schraubverschlussflaschen bekannt und eine Anordnung solcher Elemente zu einem Flaschenträger. Diese Flaschenträger sind jedoch ebenfalls kompliziert aufgebaut.

Aufgabe der vorliegenden Erfindung ist es zum einen, dem Benutzer von Getränkeflaschen mit Drehverschlüssen eine Vorrichtung zum leichten und ergonomischen Öffnen der Drehverschlüsse zur Verfügung zu stellen, wobei diese Vorrichtung einfach und kostengünstig herzustellen sein und- dem Benutzer einfach zugeführt werden können soll.

Diese Aufgaben werden gelöst mit einem Flaschenträger gemäß Anspruch 1 und einem System aus dem Flaschenträger und mindestens einer Flasche gemäß Anspruch 13. In den abhängigen Unteransprüchen sind vorteilhafte Ausgestaltungen dieser Gegenstände angegeben.

Der erfindungsgemäße Flaschenträger zeichnet sich dadurch aus, dass an seinem Tragkörper zumindest ein Flaschenöffner ausgebildet ist, der eine Öffnung in dem Tragkörper oder dem Tragbügel umfasst, wobei die Innenfläche der Öffnung mit der Außenumfangsfläche des Drehverschlusses der Flasche in Kontakt bringbar ist und als Schraubverschluß-Drehmomentübertragungsfläche ausgebildet ist. Mit die-Flaschenträger lässt sich ein besonders leichtes und ergonomisches Öffnen des Drehverschlusses ermöglichen, da über den Tragkörper des Flaschenträgers ein Hebel und dadurch eine Drehmomentverstärkung bereit gestellt wird, das Drehmoment sicher übertragen wird und die Hand des Benutzers am Tragkörper wesentlich besser angreifen kann und damit ein Abrutschen vermieden wird. Weiterhin lässt sich der Flaschenträger sehr kostengünstig herstellen und mit ihm wird dem Benutzer schon beim Einkauf der Getränkeflaschen der zugehörige Flaschenöffner bereitgestellt, so dass er keinen anderen parat haben muss.

Vorteilhaft ist die Schraubverschluss-Drehmomentübertragungsfläche als Kraftschluss-, insbesondere Reibschluss- und/oder Formschlussfläche gebildet, wodurch eine besonders sichere Kraftübertragung gewährleistet ist.

Wenn der Träger einstückig ausgebildet ist, kann er besonders kostengünstig hergestellt werden.

Bevorzugt ist die Öffnung mit einem im Wesentlichen kreisförmigen Querschnitt ausgebildet, da dadurch die mit kreisförmig ausgebildetem Querschnitt versehenen Drehverschlüsse längs ihrer Umfangsfläche gleichmäßig umfasst werden können. Insbesondere ist es hierbei bevorzugt, wenn sich der Durchmesser der Öffnung über den Querschnitt des Tragkörpers konisch verjüngt. Dadurch wird zum einen das Aufsetzen des Flaschenöffners auf den Drehverschluss erleichtert, da eine automatische Zentrierung erfolgt, andererseits ermöglicht die konische Formgebung der Öffnung die Verwendung des Flaschenöffners bei Drehverschlüssen mit unterschiedlichen Durchmessern, so dass quasi ein Universalöffner zur Verfügung gestellt wird.

Besonders bevorzugt sind an der Innenfläche der Öffnung nach Innen vorstehende Vorsprünge angeordnet, die insbesondere axial ausgerichtet sind. Diese Vorsprünge, die insbesondere lamellenartig ausgebildet sein können, ermöglichen ein besseres Eingreifen in den Drehverschluss, da diese Drehverschlüsse meistens entlang der Umfangsfläche radial verlaufende regelmäßige Einkerbungen aufweisen, die beim maschinellen Aufdrehen des Verschlusses auf die Flasche erforderlich sind. Andererseits ermöglichen die Vorsprünge bei den üblicherweise aus Kunststoff hergestellten Drehverschlüssen dadurch ein zusätzliches Verkrallen, dass sie sich radial in das Drehverschlussmaterial einkerben. In jedem Fall wird durch die Vorsprünge ein zahnklinkenartiges Verkrallen des Flaschenöffners mit dem Drehverschluss ermöglicht, wodurch sich höhere Drehmomente übertragen lassen.

Vorteilhaft kann zum erleichterten Aufschieben des Flaschenöffners auf den Drehverschluss vorgesehen sein, dass die Vorsprünge ein- oder beidseitig mit axial verlaufenden Rampen versehen sind, sich die Höhe des Vorsprungs also von einer Außenseite der Öffnung zum Inneren der Öffnung hin erweitert und so das Aufsetzen des Flaschenöffners auf dem Drehverschluss erleichtert wird.

Bei der Anordnung der Vorsprünge ist es bevorzugt, wenn diese schuppenförmig, insbesondere überlappend längs der Innenumfangsfläche angeordnet und insbesondere elastisch federnd ausgebildet sind, weil dann der Schraubverschluß besonders sicher vom Flaschenöffner erfaßt und gehalten wird. Außerdem ist es vorteilhaft, wenn die Vorsprünge sich entlang einer Sekante des Öffnungsquerschnitts, d. h. geneigt gegenüber dem Radius der Öffnung in Aufdrehrichtung des Drehverschlusses, also üblicherweise entgegen dem Uhrzeigersinn erstrecken. Auf diese Weise ist ein noch besserer Kraftschluss zwischen dem Drehverschluss und dem Flaschenöffner sicher gestellt, da die Vorsprünge sich in Kraftwirkungsrichtung beim Aufschrauben des Drehverschlusses erstrecken und sich beim Öffnen des Drehverschlusses von der Innenumfangsfläche gegen den Drehverschluss aufspreitzen und so noch besser verkrallen. Vorteilhaft sind die Vorsprünge in Umfangsrichtung der Öffnung gleichmäßig beabstandet angeordnet, da sich dadurch eine gleichmäßige Kraftverteilung auf den Drehverschluss ergibt.

Vorzugsweise weist der Flaschenträger eine rechteckige Form auf, wobei an einer bzw. beiden Schmalseiten des Rechtecks Flaschenöffner ausgebildet sind. Auf diese Weise entsteht ein relativ großer Hebel zur Drehmomentverstärkung über den Tragkörper zur Verfügung. Falls dieser Vorteil entbehrlich ist, kann es jedoch auch vorgesehen sein, dass ein Flaschenöffner im Wesentlichen mittig im Tragkörper angeordnet ist. Zweckmäßigerweise kann der Flaschenöffner auch in den clipsartigen Aufnahmen integriert bzw. ausgebildet sein, die mit ihren clipsartigen Schenkeln eine teilkreisförmige Öffnung mit einem Einführschlitz für das Einführen des Schraubverschlusses einer Flasche aufweisen. Hierbei ist es möglich, den vorzugsweise als Reibschluss- und/ oder Formschlussfläche ausgebildeten Flaschenöffner nicht nur in einer clipsartigen Aufnahme sondern in mehreren insbesondere in allen clipsartigen Aufnahmen auszubilden. Durch Drehen der entsprechenden im Träger aufgehängten Flasche kann dann in einfacher Weise der üblicherweise mit einem bandartigen Sicherheitsverschluss ausgebildete Schraubverschluss geöffnet werden. Im Übrigen kann die Ausbildung der Öffnung des Flaschenöffners, die entweder kreisförmig oder teilkreisförmig ausgebildet sein kann, auch abschnittsweise über den Innenumfang der Öffnung vorgesehen seien.

Um eine besonders wirtschaftliche Herstellung des Flaschenträgers zu ermöglichen, ist dieser vorzugsweise Kunststoff, insbesondere aus einem recyclebaren Kunststoff hergestellt, wobei Polyethylen, insbesondere Polyethylen-Regenerat bevorzugt wird.

Das erfindungsgemäße System für die hängende Aufnahme von Flaschen und dgl. Behältern, die mit Schraubverschlüssen versehen sind, umfasst einen Flaschenträger aus einem Tragbügel und einem mit einer Aufnahmeeinrichtung für die hängende Aufnahme von Flaschen versehenen Tragkörper, mindestens eine in dem Tragkörper eingehängten Flasche mit einem Schraubverschluß und einen Flaschenöffner, wie er zuvor beschrieben wurde. Weiterhin für das System vorteilhaft eine Schrumpffolienverpackung oder eine Banderole vorgesehen sein, die die Flaschen oder die Flaschen und den Träger zumindest teilweise umschließen. Auf diese Weise ist das System noch stabiler ausgeführt und gegenüber einer unbeabsichtigten Flaschenentnahme gesichert.

Das erfindungsgemäße Verfahren zur Herstellung von Kunststoffkörpern, die wenigstens lokal einen oder mehrere dünne Materialquerschnitte aufweisen, besteht darin, dass am Beginn des Einspritzvorgangs die Spritzgussform wenigstens im Bereich der zu erhaltenden dünnen Materialquerschnitte einen Formspalt aufweist, der größer ist als zur Erzielung des dünnen Materialquerschnitts notwendig ist. Erst beim weiteren Verlauf des Befüllens der Spritzgussform bzw. nach dem Abschluss dieses Befüllens wird der Formspalt im Bereich der dünnen Materialquerschnitte verringert und so das Formteil mit den gewünschten Materialquerschnitten versehen. Auf diese Weise ist beim Beginn des Einfüllens der Spritzgussform sicher gestellt, dass auch bei hochviskosem Material, wie es Polyethylen-Regenerat darstellt, alle Bereiche der Spritzgussform mit Kunststoffmaterial ausgefüllt werden und sich keine Leerstellen ergeben. Der Kunststoffdurchsatz wird also im Bereich der dünnen Materialquerschnitte nicht durch einen engen Formspalt verringert bzw. verhindert, sondern der erforderliche schmale Formspalt wird erst dann eingestellt, wenn das vollständige Ausfüllen der Spritzgussform sichergestellt ist. Mit diesem Verfahren lassen sich auf besonders einfache und ökonomische Weise Flaschenträger aus Polyethylen-Regenerat herstellen, die einen über Filmscharniergelenkverbindungen mit dem Tragkörper einstückig verbundenen Trägerbügel aufweisen.

Bevorzugt wird hierbei nur der Formspalt im Bereich der zu erzielenden dünnen Materialquerschnitte verringert, es kann jedoch auch vorgesehen sein, dass der gesamte Formspalt der Spritzgussform, beispielsweise durch ineinander bewegliche Formteile, verringert wird.

Vorteilhaft wird der Formspalt jedoch durch Schieber, Stempel oder dgl. verändert, wobei die Schieber, Stempel oder dgl. bevorzugt hydraulisch angetrieben sind. Weiterhin ist es bevorzugt, wenn die Schieber, Stempel oder dgl. schräg zum Formspalt verschieblich sind, da dadurch ein größerer Verschiebeweg bereitgestellt wird und deshalb eine präzisere Einstellung des Formspalts ermöglicht wird als dies bei senkrecht zum Formspalt verschieblichen Schiebern, Stempeln oder dgl. der Fall ist.

Weiter Vorteile, Kennzeichen und besondere Merkmale der vorliegenden Erfindung werden im Folgenden im Zusammenhang mit der beigefügten Zeichnung beschrieben. Darin zeigen
- Fig. 1: einen Flaschenträger mit integriertem Flaschenöffner und
- Fig. 2: eine Spritzgussform mit einem verschieblichen Schieber.

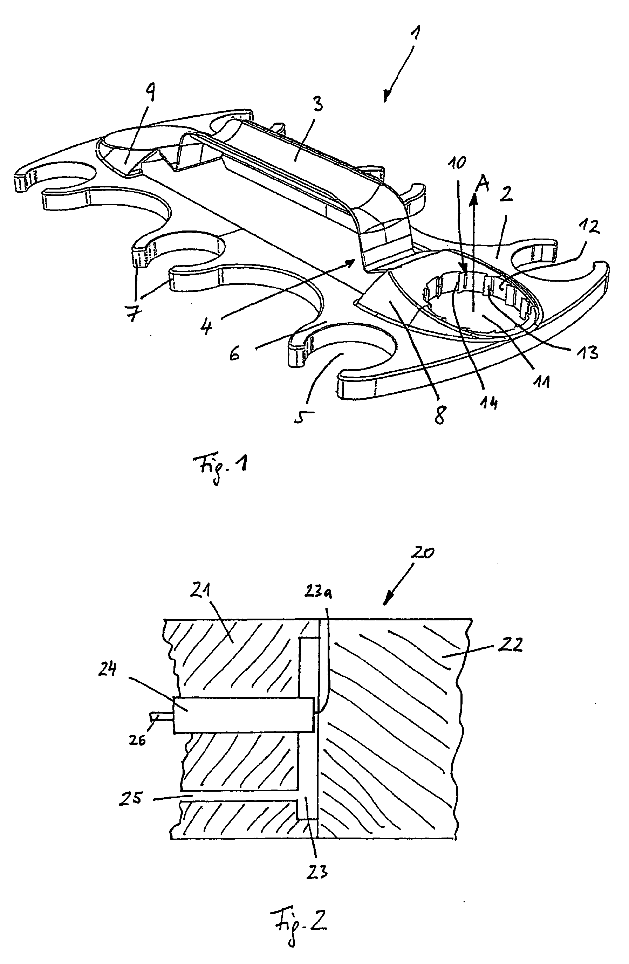

In Fig. 1 ist rein schematisch eine bevorzuge Ausführungsform des erfindungsgemäßen Flaschenträgers 1 dargestellt. Der Flaschenträger 1 besteht aus einem Tragkörper 2 und einem Tragbügel 3, der über eine Filmscharniergelenkverbindung 4 einstückig mit dem Tragkörper 2 verbunden ist. Der Flaschenträger 1 ist kostengünstig aus Polyethylen-Regenerat hergestellt und weist eine im Wesentlichen rechteckige Form auf, wobei jeweils gegenüberliegend an den Längsseiten des Tragkörpers 2 drei clipsartige Aufnahmen 5, in die Getränkeflaschen (nicht gezeigt) eingeclipst werden können, angeordnet sind. Üblicherweise verwendete Getränkeflaschen aus PET weisen einen Flaschenhals auf, an den sich ein sog. Neck-Ring, der als Kragen umfangsmäßig über dem Flaschenhals vorsteht, und oberhalb des Neck-Rings ein zylindrischer Bereich mit Außengewinde anschließt, auf dem der Drehverschluss befestigt ist. Nach dem Einclipsen der Getränkeflasche in die Aufnahme 5 stützt sich die Getränkeflasche mit dem Neck-Ring vertikal auf der Auflage 6 der Aufnahme 5 ab. Gegenüber einem seitlichen Herausgleiten aus der Aufnahme 5 ist die Flasche durch Umfangsvorsprünge 7 gesichert, die den Flaschenhals seitlich umfassen.

Der Tragkörper 2 weist jeweils zwei an den gegenüber liegenden Schmalseiten angeordnete Bereiche 8, 9 auf, die gegenüber dem übrigen Tragkörper 2 in Richtung auf den Tragbügel 3 ansteigend erhöht ausgebildet sind. Diese Bereiche 8, 9 können dabei gegenüber dem übrigen Tragkörper 2 eine größere Materialstärke aufweisen, jedoch ist es bevorzugt, wenn es sich um Ausformungen handelt, so dass die Stapelbarkeit mehrerer Flaschenträger 1 so erhalten bleibt, dass die Tragkörper 2 der Flaschenträger 1 im Wesentlichen aufeinander zu liegen kommen. Im Bereich 8 ist ein Flaschenöffner 10 vorgesehen, der durch eine Öffnung 11 mit im Wesentlichem kreisförmigem Querschnitt gebildet ist, wobei die umlaufende Innenfläche 12 der kreisförmigen Öffnung 11 sich in Pfeilrichtung A konisch verjüngt. Weiterhin sind an der Innenumfangsfläche 12 der kreisförmigen Öffnung 11 lamellenartige Vorsprünge 13 gleich beabstandet angeordnet, die parallel zur Pfeilrichtung A, d. h. axial verlaufen und in Bezug auf den Radius der kreisförmigen Öffnung 11 schräg geneigt angeordnet sind. Anders ausgedrückt sind die lamellenartigen Vorsprünge 13 jeweils entlang gleicher Sekanten angeordnet und weisen entgegen den Uhrzeigersinn.

Mit Hilfe des in den Flaschenträger 1 integrierten Flachenöffners 10 können nun Drehverschlüsse von Getränkeflaschen geöffnet werden. Dazu wird die Öffnung 11 des Flaschenöffners 10 auf dem Schraubverschluss der Getränkeflasche platziert und angedrückt und der Flaschenträger 1 entgegen dem Uhrzeigersinn gedreht, bis der Drehverschluss von der Getränkeflasche gelöst ist. Das Lösen des Drehverschlusses erfolgt aufgrund der folgenden Merkmale besonders einfach und ergonomisch. Zum einen wird durch die konische Ausformung der Öffnung 11 das Aufsetzen des Flaschenöffners 10 auf dem Drehverschluss erleichtert und nach erfolgtem Aufsetzen und Andrücken über die Vorsprünge 13 eine Klemmwirkung erzielt, die einen Reibschluss zwischen Flaschenöffner 10 und Drehverschluss sicherstellt. Zum andern erfolgt zwischen den üblicherweise bei solchen Drehverschlüssen vorhandenen axial ausgerichteten Rillen und den lamellenartigen Vorsprüngen 13 ein zahnradartiges Verkrallen, so dass zwischen Flaschenöffner 10 und Drehverschluss außerdem ein Formschluss besteht. Reibschluss und Formschluss zwischen Flaschenöffner 10 und Drehverschluss der Getränkeflasche lassen ein relativ großes Drehmoment übertragen, das über die Hebelwirkung des lang gestreckten Flaschenträgers 1 einfach bereit gestellt werden kann.

Zur Gewichtsersparnis bei dem Flaschenträger 1 und auch zum weiterhin vereinfachten Umgang mit dem Flaschenträger 1 als Flaschenöffner kann im Bereich 9 ein zweiter Flaschenöffner vorgesehen sein. Weiterhin kann vorgesehen sein, dass die vorderen Kanten 14 der Vorsprünge eine der Innenumfangsfläche 12 gleiche Konizität aufweisen, so dass das Aufschieben des Flaschenöffners 10 auf den Drehverschluss erleichtert wird. Zusätzlich zu dieser Konizität der Kante 14 kann diese im unteren Bereich eine Anphasung aufweisen, die als Aufschiebrampe beim Aufbringen des Flaschenöffners 10 auf den Drehverschluss fungiert.

Üblicherweise weisen die Vorsprünge 13 solche Dimensionen auf, dass ihre Kanten 14 formschlüssig in die Rillen eines Drehverschlusses eingreifen. Insbesondere bei Drehverschlüssen aus Kunststoffmaterial kann es jedoch vorteilhaft sein, wenn die Vorsprünge 13 so dimensioniert, also vergrößert sind, dass die Kanten 14 nicht nur formschlüssig in die Rillen der Drehverschlüsse eingreifen, sondern ein zusätzlicher Einschneideffekt erzielt wird, so dass sich der Flaschenöffner 10 noch besser mit dem Drehverschluss verkrallt. Dieser Einschneideffekt wird zusätzlich durch eine Konizität der Kante 14 unterstützt. Somit kann der Flaschenträgers 1 als Flaschenöffner sowohl bei Flaschen mit Drehverschlüssen mit äußeren axial verlaufenden Rillen als auch solchen ohne Rillen, also mit glatter Oberfläche, verwendet werden.

In Fig. 2 ist rein schematisch eine Spritzgussform 20 dargestellt, die aus zwei Formhälften 21, 22 besteht und zwischen den Formhälften 21, 22 einen Formspalt 23 aufweist. Innerhalb der Formhälfte 21 ist im Bereich 23a des Formspaltes 23 ein Schieber 24 verschieblich angeordnet, der lokal für eine Verringerung bzw. Erweiterung des Formspalts 23 sorgt. Zum Einspritzen der Kunststoffmasse ist eine Einspritzdüse bzw. -kanal 25 vorgesehen.

Mit der erfindungsgemäßen Spritzgussform 20 lassen sich nun Kunststoffkörper mit dünnen Materialquerschnitten auch dann ökonomisch herstellen, wenn als Kunststoff ein hochviskoses Material verwendet wird, wie beispielsweise Polyethylen-Regenerat.

Im in der Fig. 2 dargestellten Beispiel erhält der hergestellte Kunststoffkörper eine Form entsprechend des Formspalts 23 und weist lokal im Bereich 23a des Formspalts 23 einen dünnen Materialquerschnitt auf, beispielsweise für ein Filmscharnier auf. Ohne den beweglichen Schieber 24 müsste das durch den Kanal 25 eingespritzte hochviskose Kunststoffmaterial den Engpass 23a im Formspalt 23 passieren, der bei Filmscharnieren im Bereich von einigen Zehntel Millimetern liegen kann. Ein solcher Kunststoffkörper lässt sich jedoch auf diese Weise nicht ökonomisch herstellen, da entweder sehr hohe Drücke und eine sehr große Zeit zum vollständigen Füllen des Formspalts 23 mit hochviskosem Kunststoffmaterial erforderlich sind, weil andernfalls die Kunststoffform nicht vollständig gefüllt wird.

Mit dem erfindungsgemäßen Verfahren und der erfindungsgemäßen Spritzgussform 20 werden diese Probleme dadurch gelöst, dass beim Einspritzen des Kunststoffmaterials in den Formspalt 23 über den Kanal 25 der Schieber 24, der bevorzugt über die Verbindung 26 hydraulisch betrieben wird (nicht gezeigt), in eine Position zurückgezogen wird, die für einen schnellen Durchfluss des Kunststoffmaterials durch den Formspalt 23 einen ausreichend großen lokalen Formspalt 23a bereitstellt. Im vorliegenden Beispiel könnte der Schieber 24 beispielsweise so weit zurückgeschoben werden, dass der Formspalt 23 über seinen gesamten Bereich ein gleichförmiges Maß aufweist.

Um eine präzisere Einstellung des lokalen Formspalts 23a zu erreichen, kann es vorgesehen sein, dass der Schieber 24 nicht senkrecht zum Formspalt 23 verläuft, sondern schräg dazu. Bei mehreren Bereichen mit geringer dimensionierten Formspalten 23a können mehrere Schieber 24 vorgesehen sein, die unabhängig voneinander, insbesondere aufeinander folgend, angesteuert werden können, so dass der Durchfluss des hochviskosen Kunststoffmaterials durch den Formspalt 23 optimal gewährleistet wird. Nachdem ausreichend Kunststoffmaterial in den Formspalt 23 eingefüllt ist, wird der Schieber 24 in eine Position verschoben, bei der der lokale Formspalt 23a das erforderliche Maß zur Herstellung des gewünschten dünnen Materialquerschnitts aufweist. Auf diese Weise ist sichergestellt, dass zum einen der Formspalt vollständig gefüllt wird und zum anderen dieses Füllen in einer relativ kurzen Zeit unter moderaten Einspritzmethoden erfolgen kann.

Insbesondere falls der gesamte Kunststoffkörper einen dünnen Materialquerschnitt aufweist, kann die Herstellung auch dadurch erfolgen, dass der Formspalt als Ganzes variabel gehalten wird. Dies kann zum einen dadurch bewerkstelligt werden, dass eine Formhälfte in der anderen verschieblich gehalten wird oder dass bei einer Formhälfte die den Formspalt begrenzende Seitenfläche Teil eines Schiebers oder einer Stempelfläche ist. Selbstverständlich können auch beide Formhälften solche verschieblichen Elemente aufweisen.

## Patentansprüche

1. Träger (1) für die hängende Aufnahme von Flaschen und dgl. Behältern mit Schraubverschlüssen umfassend einen Tragbügel (3) zum Ergreifen des Trägers (1) mit den Flaschen und einen Tragkörper (2) mit randseitig ausgebildeten clipsartigen Aufnahmen (5) für die Flaschen, **dadurch gekennzeichnet, dass** an dem Träger (1) mindestens ein Flaschenöffner (10) durch eine Öffnung (11) in dem Tragkörper (2) oder dem Tragbügel (3) gebildet ist, deren Innenumfangsfläche (12) als Schraubverschluss-Drehmomentübertragungsfläche ausgebildet ist, wobei der Träger (1) einstückig ausgebildet ist.

2. Träger (1) nach Anspruch 1, **dadurch gekennzeichnet, dass** die Schraubverschluss-Drehmomentübertragungsfläche als Kraftschluss-, insbesondere Reibschluss- und/oder Formschlussfläche gebildet ist.

3. Träger (1) nach einem der vorherigen Ansprüche, **dadurch gekennzeichnet, dass** die Öffnung (11) mit im Wesentlichen kreisförmigem Querschnitt ausgebildet ist.

4. Träger (1) nach Anspruch 3, **dadurch gekennzeichnet, dass** der Durchmesser der Innenumfangsfläche (12) der Öffnung (11) sich über den Querschnitt des Tragkörpers (2) konisch verjüngt.

5. Träger (1) nach einem der vorherigen Ansprüche, **dadurch gekennzeichnet, dass** an der Innenumfangsfläche (12) der Öffnung (11) nach Innen vorstehende, insbesondere lamellenartige Vorsprünge (13) angeordnet sind.

6. Träger (1) nach Anspruch 5, **dadurch gekennzeichnet, dass** die Vorsprünge (13) schuppenförmig, insbesondere überlappend längs der Innenumfangsfläche (12) angeordnet und insbesondere elastisch federnd ausgebildet sind.

7. Träger (1) nach Anspruch 5 oder 6, **dadurch gekennzeichnet, dass** die Vorsprünge (13) sich axial entlang von Sekanten der Öffnung (11), also schräg geneigt gegenüber dem Radius der Öffnung (11), insbesondere entgegen dem Uhrzeigersinn, erstrecken, derart, dass die Vorsprünge (13) einen nur in eine Richtung sperrenden rastklinkenartigen Sperrmechanismus bilden.

8. Träger (1) nach einem der Ansprüche 5 bis 7, **dadurch gekennzeichnet, dass** die Vorsprünge (13) konisch verlaufende vordere Kanten (14) aufweisen, wobei die Kanten (14) bevorzugt mit einer Aufbringrampe in Form einer Anphasung versehen sind.

9. Träger (1) nach einem der Ansprüche 5 bis 8, **dadurch gekennzeichnet, dass** die Vorsprünge (13) in gleichem Umfangsabstand angeordnet sind.

10. Träger (1) nach einem der vorherigen Ansprüche, **dadurch gekennzeichnet, dass** der Tragkörper (2) im Wesentlichen rechteckig ausgebildet ist und der wenigstens eine Flaschenöffner (10) an einer Schmalseite des Tragkörpers (2) angeordnet ist.

11. Träger (1) nach einem der vorherigen Ansprüche, **dadurch gekennzeichnet, dass** der Träger (1) aus Kunststoff, insbesondere einem recyclebaren Kunststoff besteht.

12. Träger (1) nach Anspruch 11, **dadurch gekennzeichnet, dass** der Träger (1) aus Polyethylen, insbesondere Polyethylen-Regenerat besteht.

13. System für die hängende Aufnahme von Flaschen und dgl. Behältern, die mit Schraubverschlüssen versehen sind, mit einem Träger (1) aus einem Tragbügel (3) und einem mit randseitig ausgebildeten clipsartigen Aufnahmen (5) für die hängende Aufnahme von Flaschen versehenen Tragkörper (2) und mit mindestens einer in dem Tragkörper (2) eingehängten Flasche mit einem Schraubverschluss, **dadurch gekennzeichnet, dass** ein Flaschenöffner (10) gemäß einem der vorherigen Ansprüche im Tragkörper (2) oder Tragbügel (3) ausgebildet ist.

14. System nach Anspruch 13, **dadurch gekennzeichnet, dass** weiterhin eine Schrumpffolienverpackung oder eine Banderole vorgesehen ist, die die Flaschen oder die Flaschen und den Träger (1) zumindest teilweise umfasst.

## Claims

1. A carrier (1) for hanging support for bottles and similar containers with screw tops, comprising a carrying bracket (3) for grasping the carrier (1) including the bottles, and comprising a carrier body (2) with peripherally configured clip shaped receivers (5) for bottles, wherein at least one bottle opener (10) is formed at the carrier (1) through an opening (11) in the carrier body (2) or in the carrying bracket (3), wherein the inner circumferential surface (12) of the opening is configured as a torque transmission surface for the screw top and the carrier (1) is configured integral.

2. The carrier (1) according to claim 1, wherein the torque transmission surface for the screw top is configured as a friction locking surface and/or as a form locking surface.

3. The carrier (1) according to one of the preceding claims, wherein the opening (11) is configured with a substantially circular cross section.

4. The carrier (1) according to claim 3, wherein the diameter of the inner circumferential surface (12) of the opening (11) tapers conically over the diameter of the carrier body (2).

5. The carrier (1) according to one of the preceding claims, wherein inward protruding, in particular lamellar protrusions (13) are disposed at the inner circumferential surface (12) of the opening (11).

6. The carrier (1) according to claim 5, wherein the protrusions (13) are configured scale shaped, in particular disposed overlapping along the inner circumferential surface (12), and in particular configured resilient and elastic.

7. The carrier (1) according to claim 5 or 6, wherein the protrusions (13) extend axially along secants of the opening (11), thus inclined at a slant angle relative to the radius of the opening (11), in particular counter-clockwise, so that the protrusions (13) form a ratchet type locking mechanism locking only in one direction.

8. The carrier (1) according to one of the claims 5 through 7, wherein the protrusions (13) comprise conically extending front edges (14), wherein the edges (14) are preferably provided with an insertion ramp configured as a bevel.

9. The carrier (1) according to one of the claims 5 through 8, wherein the protrusions (13) are disposed at equal circumferential distances from one another.

10. The carrier (1) according to one of the preceding claims, wherein the carrier body (2) is configured substantially rectangular and the at least one bottle opener (10) is disposed at a narrow side of the carrier body (2).

11. The carrier (1) according to one of the preceding claims, wherein the carrier (1) is comprised of plastic material, in particular recyclable plastic material.

12. The carrier (1) according to claim 11, wherein the carrier (1) is comprised of polyethylene, in particular recycled polyethylene.

13. A system for hanging support for bottles and similar containers provided with screw tops, wherein the system comprises a carrier (1) comprising a carrying bracket (3) and a carrier body (2) with peripherally configured clip shaped receivers (5) for hanging support for bottles, and the system comprises at least one bottle with a screw top, wherein the bottle is engaged in the carrier body (2), wherein a bottle opener (10) according to one of the preceding claims is configured in the carrier body (2) or the carrying bracket (3).

14. A system according to claim 13, wherein furthermore a shrink foil packaging or a banderole is provided, which at least partially encloses the bottles or the bottles and the carrier (1).

## Revendications

1. Portoir (1) pour loger en suspension des bouteilles et des réservoirs analogues pourvus de bouchons à visser comprenant une anse de transport (3) permettant de saisir le portoir (1) contenant les bouteilles ainsi qu'une structure porteuse (2), dont le bord présente des logements à encliquetage (5) pour les bouteilles, **caractérisé en ce que** le portoir (1) comprend au moins un ouvre-bouteille (10) formé par une ouverture (11) dans la structure porteuse (2) ou dans l'anse de transport (3), dont la surface périphérique interne (12) est réalisée en tant que surface de transmission de couple pour bouchon à visser, le portoir (1) étant réalisé d'une seule pièce.

2. Portoir (1) selon la revendication 1, **caractérisé en ce que** la surface de transmission de couple pour bouchon à visser est réalisée en tant que surface d'accouplement de force, en particulier en tant que surface d'accouplement à frottements et/ou en tant que surface d'accouplement de forme.

3. Portoir (1) selon l'une quelconque des revendications précédentes, **caractérisé en ce que** l'ouverture (11) est réalisée avec une coupe droite essentiellement circulaire.

4. Portoir (1) selon la revendication 3, **caractérisé en ce que** le diamètre de la surface périphérique interne (12) de l'ouverture (11) diminue de manière conique en suivant la coupe droite de la structure porteuse (2).

5. Portoir (1) selon l'une quelconque des revendications précédentes, **caractérisé en ce que** des protubérances (13) dirigées vers l'intérieur, en particulier des protubérances en forme de lamelles, sont disposées sur la surface périphérique interne (12) de l'ouverture (11).

6. Portoir (1) selon la revendication 5, **caractérisé en ce que** les protubérances (13) sont disposées de manière imbriquée, en particulier se chevauchant le long de la surface périphérique interne (12) et qu'elles sont réalisées en particulier avec une certaine élasticité.

7. Portoir (1) selon la revendication 5 ou 6,
**caractérisé en ce que** les protubérances (13) s'étendent axialement le long de sécantes de l'ouverture (11), à savoir en biais par rapport au rayon de l'ouverture (11), en particulier dans le sens contraire des aiguilles d'une montre, si bien que les protubérances (13) forment un mécanisme d'arrêt analogue à un mécanisme d'arrêt à cliquet qui ne bloque que dans un sens.

8. Portoir (1) selon l'une quelconque des revendications 5 à 7, **caractérisé en ce que** les protubérances (13) présentent des bords antérieurs coniques (14), ces bords (14) étant pourvus de préférence d'une rampe d'introduction sous la forme d'un chanfreinage.

9. Portoir (1) selon l'une quelconque des revendications 5 à 8, **caractérisé en ce que** les protubérances (13) sont disposées sur la circonférence de manière équidistante.

10. Portoir (1) selon l'une quelconque des revendications précédentes, **caractérisé en ce que** la structure porteuse (2) est réalisée essentiellement sous forme rectangulaire et le au moins un ouvre-bouteille (10) est disposé sur un petit côté de la structure porteuse (2).

11. Portoir (1) selon l'une quelconque des revendications précédentes, **caractérisé en ce que** le portoir (1) est fait de matière plastique, en particulier d'une matière plastique recyclable.

12. Portoir (1) selon la revendication 11, **caractérisé en ce que** le portoir (1) est fait de polyéthylène, en particulier d'une matière régénérée de polyéthylène.

13. Système pour loger en suspension des bouteilles et des réservoirs analogues pourvus de bouchons à visser, comprenant un portoir (1) composé d'une anse de transport (3) et d'une structure porteuse (2), dont le bord présente des logements à encliquetage (5) pour loger en suspension des bouteilles et au moins une bouteille pourvue d'un bouchon à visser suspendue dans la structure porteuse (2), **caractérisé en ce qu'**un ouvre-bouteille (10) selon l'une quelconque des revendications précédentes est formé dans la structure porteuse (2) ou dans l'anse de transport (3).

14. Système selon la revendication 13, **caractérisé en ce qu'**il est prévu en outre un emballage par film rétractable ou une bande de fermeture qui entoure les bouteilles ou les bouteilles et le portoir (1) au moins en partie.
